# EUROPÄISCHE PATENTSCHRIFT

(11) **EP 0 879 367 B1**
(45) Veröffentlichungstag und Bekanntmachung des Hinweises auf die Patenterteilung: **02.06.1999**
(21) Anmeldenummer: 97914134.8
(22) Anmeldetag: 10.02.1997
(51) Int. Cl.: F16G 13/16

(54) **ENERGIEFÜHRUNGSKETTE MIT FÜHRUNGSANSCHLAG**
ENERGY GUIDE CHAIN WITH GUIDE STOP
CHAINE DE GUIDAGE D'ENERGIE A BUTEE DE GUIDAGE

(30) Priorität: 16.02.1996 DE 19605775
(43) Veröffentlichungstag der Anmeldung: 25.11.1998
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Stachow, E.-W., Prof. Dr.
(86) Internationale Anmeldenummer: DE9700246
(87) Internationale Veröffentlichungsnummer: WO9730299

(56) Entgegenhaltungen:
- DE-A- 4 307 081
- DE-A- 4 433 678
- DE-U-29 607 228
- GB-A- 1 249 018
- PATENT ABSTRACTS OF JAPAN vol. 015, no. 493 (M-1191), 13.Dezember 1991 & JP 03 213748 A (TSUBAKIMOTO CHAIN CO;OTHERS: 01), 19.September 1991,

## Beschreibung

Die Erfindung betrifft eine Energieführungskette für Kabel und dergleichen, deren Kettenglieder aus gegenüberliegenden Seitenwänden und diese verbindenden oberen und unteren Querstegen bzw. Wänden bestehen und die gelenkig miteinander verbunden sind, wobei die Energieführungskette einen unteren, etwa geradlinigen Teil (Untertrum) bildet, an den sich mittels eines Umlenkbereichs von mehr als 180° ein oberer, durchhängender Bereich (Obertrum) anschließt, der mit seiner Unterseite zumindest teilweise auf der Oberseite des Untertrums gleitet, und wobei einige Kettenglieder mit Führungsanschlägen versehen sind, die die seitliche Bewegung des gegenüberliegenden Trums verhindern.

Als Kettenglieder im Sinne der vorliegenden Erfindung sind dabei sowohl Kettenglieder mit lösbar an den Seitenwänden befestigten Querstegen als auch solche mit einteilig an den Seitenwänden angeformten Querstegen zu verstehen. Die Querstege können dabei auch eine größere Ausdehnung in Kettenlängsrichtung aufweisen, so daß der Innenraum der Energieführungskette nahezu vollständig umschlossen ist.

Des weiteren sollen Energieführungsketten aus einem kontinuierlichen, beispielsweise extrudierten, biegsamen Formkörper mitumfaßt sein, bei dem die Kettenglieder beispielsweise dadurch ausgebildet sind, daß die Außenwand sowie die Seitenwände des Formkörpers durch Einschnitte durchtrennt sind, wobei die im Umlenkbereich innenliegende Wand des Formkörpers im wesentlichen als durchgehendes Band vorliegt. Die die Kettenglieder miteinander verbindenden Gelenke sind dabei aufgrund der elastischen Deformierbarkeit des Materials der Energieführungskette im wesentlichen als Film- oder Bandscharniere ausgebildet.

Bei längeren Verfahrwegen der Energieführungskette ohne Verwendung von Führungsrinnen, in die Ober- und Untertrum eingelegt werden, kommt es aufgrund des axialen Spiels der Kettenglieder zueinander zu einer seitlichen Abweichung vom Geradlauf der Kette. Dies führt dazu, daß die Gleitkanten der Seitenwände des Obertrums über die Außenseite der unteren Querstege oder Querwände gleiten, so daß diese verhältnismäßig dünnen Bauteile abgeschliffen und im ungünstigsten Falle zerstört werden können. Die Kette kann darüberhinaus bei größeren Abweichungen vom Geradlauf verkanten oder seitlich abkippen. Bei größeren seitlichen Abweichungen werden des weiteren die Gelenkverbindungen der Kettenglieder über Gebühr beansprucht.

Aus der DE 44 33 678 A1 sind bereits Energieführungsketten bekannt, bei denen Kettenglieder vorgesehen sind, die an der Außenseite mindestens einer Seitenwand einen Führungsanschlag aufweisen, der beispielsweise als schlittenähnlicher Führungsanschlag, Drehkreuz oder ein- oder zweiarmiger Hebel ausgebildet ist, wobei die Führungsanschläge in der Ebene der Außenseite der Kettengliedseitenwände oder einer dazu parallelen Ebene begrenzt bewegbar sind. Durch die Führungsanschläge werden in dem Kettenbereich, in dem das Obertrum auf dem Untertrum gleitet, die Seitenwände des gegenüberliegenden Trums übergriffen und in Laufrichtung der Kette geführt, so daß seitliche Abweichungen zumindest in diesem Bereich nicht mehr möglich sind. Wirken die Führungsanschläge des Obertrums mit denen des Untertrums bei der Verfahrung der Energieführungskette derart zusammen, daß die Führungsanschläge des Obertrums dabei verdreht, nach oben verschwenkt oder nach oben verschoben werden, so ist hierdurch die Verfahrgeschwindigkeit der Energieführungskette beschränkt, da ansonsten die Halterungen der Führungsanschläge zu hohen Belastungen ausgesetzt werden. Des weiteren ist das Zusammenwirken der Führungsanschläge bei hohen Verfahrgeschwindigkeiten mit einer beträchtlichen Lärmentwicklung verbunden. Dies ist insbesondere der Fall, wenn die Energieführungskette, ausgehend von ihrem Anschlußpunkt, jeweils in beiden Richtungen vollständig ausgefahren wird, so daß bei der Verfahrung jeder der Führungsanschläge des Obertrums bewegt wird und hierbei zur Geräuschemission beiträgt. Darüberhinaus ist bei seitlich an den Seitenwänden angeordneten Führungsanschlägen die zusätzliche Verbreiterung der Energieführungskette sowie die unregelmäßige Außenkontur, die leicht zu einem gegenseitigen Verhaken der seitlichen Vorsprünge führen kann, störend.

Der Erfindung liegt die Aufgabe zugrunde, eine Führung für Energieführungsketten zu schaffen, bei der die oben genannten Nachteile beseitigt sind und die insbesondere keine störenden seitlichen Vorsprünge aufweist und einfach und kostengünstig herstellbar ist.

Diese Aufgabe wird erfindungsgemäß dadurch gelöst, daß die Führungsanschläge als sich in Kettenlängsrichtung erstreckende Stege ausgebildet sind und an den Kettengliedern des einen Trums mindestens ein Führungsanschlag zwischen zwei Führungsanschläge an den Kettengliedern des gegenüberliegenden Trums greift, so daß die in Eingriff stehenden Kettenglieder gegen Querverschiebung relativ zueinander gesichert sind.

Die Führungsanschläge können an den äußeren Bereichen der Oberseite der Kettenglieder des Untertrums bzw. Unterseite der Kettenglieder des Obertrums angeordnet sein. Die eine Querbewegung verhindernde Führung erfolgt somit vorteilhafterweise an den äußeren Bereichen der Kette. Die Führungsanschläge können jedoch auch in anderen Bereichen der Oberseite des Obertrums bzw. Unterseite des Obertrums angeordnet sein.

Die Führungsanschläge sind bevorzugt als Doppelstege in Form von U-Profilen ausgebildet, deren Zwischenräume komplementär zu den Stegen sind. Komplementär soll in diesem Zusammenhang heißen, daß die Stege und Zwischenräume zwischen den Stegen so ausgebildet sind, daß sie zur Verhinderung einer Querbewegung der Kettenglieder zusammenwirken. Selbstverständlich können die Zwischenräume ein mehr oder weniger großes Übermaß gegenüber der Breite der Stege aufweisen, so daß eine geringfügige Querbewegung ermöglicht wird, die jedoch die Geradeausführung der übereinanderliegenden Kettenglieder im wesentlichen nicht beeinträchtigt.

In einer besonders bevorzugten Ausführungsform ist eine Vielzahl von Führungsanschlägen vorgesehen, die eine sich über die Breite der Kettenglieder erstreckende Kammstruktur bilden, wobei die stegförmigen Führungsanschläge der Kettenglieder des einen Trums in dazu komplementäre U-förmige Zwischenräume zwischen den Führungsanschlägen der Kettenglieder des gegenüberliegenden Trums greifen.

Bei der Überführung des Untertrums in das Obertrum werden die Stege der kontaktierenden Kettenglieder zunächst mit Abstand übereinander positioniert. Bei weiterer Verfahrung der Energieführungskette setzen dann die Stege der miteinander kontaktierenden Kettenglieder des Ober- und Untertrums aufeinander auf. Aufgrund des vorhandenen Gelenkspiels quer zur Achse der Kettenglieder erfolgt bei der Verfahrung der Energieführungskette ein seitlicher Versatz der übereinanderliegenden Kettenglieder, so daß ihre Stege kammartig in die U-förmigen Zwischenräume der gegenüberliegenden Kettenglieder greifen, so daß jeweils ein Schenkel eines Kettenglieds zwischen zwei Schenkeln des gegenüberliegenden Kettenglieds geführt und eine weitere seitliche Bewegung der gegenüberliegenden Kettenglieder verhindert wird.

Die sich über die Breite, vorzugsweise die gesamte Breite, der Kettenglieder erstreckende Kammstruktur hat weiterhin den Vorteil, daß sie eine besonders große Auflagefläche der sich kontaktierenden Stege und U-förmigen Zwischenräume ermöglicht und damit ein besonders geringer abrasiver Verschleiß der Führungsanschläge gegeben ist. Insbesondere wenn die Stegenden und der Grund der U-förmigen Zwischenräume als flächig ausgebildete Gleitflächen gestaltet sind, steht die gesamte Breite der Kettenglieder als Auflage- und damit als Gleitfläche zur Verfügung, so daß bei gegebenem Gewicht des Obertrums eine nur geringe Flächenpressung der Bauteile aufeinander auftritt und damit eine besonders verschleißarme Ausführungsform gegeben ist.

Die Länge der Führungsanschläge ist des weiteren vorteilhafterweise so bemessen, daß diese bei gestreckter Anordnung von Ober- und Untertrum die Länge der Zwischenräume, die zwischen Führungsanschlägen aufeinanderfolgender Kettenglieder des gegenüberliegenden Trums bestehen, überschreiten. Bei einer Überführung des Untertrums über den Umlenkbereich in das Obertrum sind lediglich die Führungsanschläge des ersten Kettengliedes des Obertrums zwischen den Führungsanschlägen des Untertrums einzufädeln. Die Führungsanschläge der nachfolgenden Kettenglieder befinden sich dann bereits in ihrer Einfädelungsposition und können ohne weiteres zwischen den Führungsanschlägen des jeweils gegenüberliegenden Trums angeordnet werden. Durch diese Führung der Führungsanschläge ist eine besonders geräuscharme sowie eine besonders ruhige und störungsarme Verfahrung der Energieführungskette gegeben, die eine sehr hohe Verfahrgeschwindigkeit ermöglicht. Insbesondere ist eine jeweils separate Positionierung der Führungsanschläge eines jeden Kettengliedes durch Wechselwirkung mit den Führungsanschlägen von Kettengliedern des gegenüberliegenden Trums nicht erforderlich, wie dies bei Führungsanschlägen der Fall ist, die an der Außenseite der Kettengliedseitenwände angeordnet sind und die unter Einwirkung der Führungsanschläge des jeweils gegenüberliegenden Trums in der Ebene der Außenseite bewegt und in ihre Sollposition überführt werden.

Die Länge der Führungsanschläge kann jedoch, allerdings unter Einbußen an Laufruhe, auch die Länge der Zwischenräume zwischen Führungsanschlägen des gegenüberliegenden Trums unterschreiten, da der seitliche Versatz der Kettenglieder, insbesondere bei hohen Verfahrgeschwindigkeiten meist nicht so hoch ist, daß die Führungsanschläge beim Passieren des Zwischenraumes zwischen den Führungsanschlägen benachbarter Kettenglieder aus ihrer Spur ausfädeln.

Vorteilhafterweise sind die Führungsanschläge in ihrer Länge so bemessen, daß sie die Abwinkelung benachbarter Kettenglieder zueinander nicht behindern und die Verschwenkung benachbarter Kettenglieder zueinander ausschließlich durch die hierfür vorgesehenen Anschläge begrenzt wird.

Um die Abwinkelung benachbarter Kettenglieder im Umlenkbereich nicht zu behindern, sollten die Führungsanschläge aus der Mittelebene der Seitenteile jeweils in Richtung auf einen der Gelenkbereiche der Kettenglieder hin versetzt angeordnet werden. Die Mittelebene ist dabei die senkrecht zur Längsrichtung der Energieführungskette mittig zwischen den Gelenkbereichen eines Kettengliedes angeordnete Ebene.

Um das Einfädeln der Führungsanschläge des einen Trums zwischen die Führungsanschläge des gegenüberliegenden Trums beim Aufsetzen derselben zu erleichtern, können die oberen bzw. unteren Außenseiten der Führungsanschläge abgeschrägt sein oder die Führungsanschläge einen trapezförmigen Querschnitt oder dergleichen aufweisen. Um zudem das Spuren der Führungsanschläge des einen Trums zwischen denen des gegenüberliegenden Trums bei der Verfahrung der Energieführungskette zu erleichtern, können auch die Stirnseiten der Führungsanschläge abgeschrägt sein.

Vorteilhafterweise sind die Führungsanschläge einstückig an der dem gegenüberliegenden Trum zugewandten Seite der Kettenglieder angeformt. Die Führungsanschläge können beispielsweise an den Querstegen angeformt sein, die mit den Seitenwänden unlösbar verbunden, beispielsweise an diesen angespritzt sind. Die Führungsanschläge können jedoch auch an anderen Bauteilen, beispielsweise auf den Schmalseiten der Kettengliedseitenteile, einstückig angeformt sein.

Bei einer Energieführungskette mit lösbar angeordneten Querstegen können die Führungsanschläge zweckmäßigerweise einstückig an den Querstegen angeformt sein. In diesem Fall sind Energieführungsketten durch Austausch der Querstege mit entsprechenden Führungsanschlägen besonders einfach nachrüstbar.

Andererseits sind auch Ausführungen denkbar, bei denen die Führungsanschläge lösbar an den Kettengliedern befestigt sind. Hierfür können separate Träger vorgesehen sein, an denen die Führungsanschläge beispielsweise einteilig angeformt sind, wobei die Träger lösbar an den Kettengliedern, z. B. an den Seitenteilen oder den Querstegen, befestigbar sind. Die Befestigung kann beispielsweise mittels Rast- oder Klemmverbindungen erfolgen.

Schließlich soll die Erfindung Ausführungen umfassen, bei denen die Führungsanschläge an den Kettengliedern begrenzt bewegbar sind. Die sich in Kettenlängsrichtung erstreckenden Stege können z. B. in quer zu den Kettengliedern verlaufenden Langlöchern, die z. B. an den Querstegen vorgesehen sind, gehaltert und in diesen parallel verschiebbar sein. Die Länge der-Langlöcher kann so bemessen sein, daß die Stege der zur Anlage aufeinander kommenden Kettenglieder durch Verschiebung in den Langlöchern, gegebenenfalls mittels an den Stirnseiten angeordneter Auflaufschrägen, einander ausweichen und aneinander vorbeigeführt werden können. Die Stege werden durch die Enden der Langlöcher in ihrer Bewegung begrenzt, so daß sie als seitlich aneinandergleitende Führungsanschläge eine Querbewegung der aufeinanderliegenden Kettenglieder verhindern. Eine selbsttätige Überführung der Führungsanschläge z. B. von den zur Kettengliedmitte innenliegenden Enden der Langlöcher zu den außenliegenden Enden derselben bei der Überführung der Kettenglieder vom Obertrum in das Untertrum und umgekehrt ist auch dadurch möglich, daß die Langlöcher in Schräglage entlang der Querrichtung der Kettenglieder geneigt angeordnet sind, so daß die verschiebbaren Führungsanschläge aufgrund der Schwerkraft an jeweils dem unteren Ende des Langloches, d. h. im Untertrum z. B. an den äußeren und im Obertrum an den inneren Enden der Langlöcher, positioniert sind.

Nachfolgend wird die vorliegende Erfindung beispielhaft erläutert und anhand der Zeichnung beschrieben. Es zeigen:
- Fig. 1: eine Energieführungskette, bestehend aus Untertrum, einem Umlenkbereich und einem Obertrum, bei der die Kettenglieder an der dem gegenüberliegenden Trum zugewandten Seite Führungsanschläge aufweisen,
- Fig. 2: einen Ausschnitt der Energieführungskette gemäß Fig. 1 in Seitenansicht (oben), im Querschnitt (Mitte) und in Draufsicht (unten),
- Fig. 3: einen Querschnitt der Energieführungskette gemäß Fig. 1 entlang des Schnittes A-A mit auf dem Untertrum abgelegtem Obertrum.

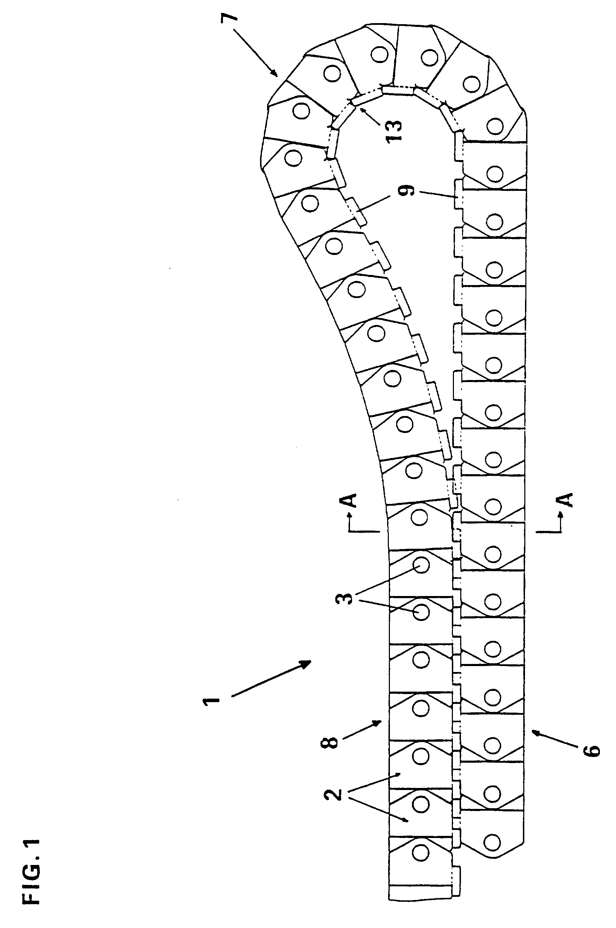

Die in den Figuren 1 bis 3 dargestellte Energieführungskette 1 besteht aus einer Vielzahl von Kettengliedern 2, die an ihren Enden mit Hilfe von Gelenkbolzen 3 begrenzt verschwenkbar miteinander verbunden sind. Die Kettenglieder 2 bestehen aus gekröpften Seitenwänden 4, die durch obere und untere Querstege 5 miteinander verbunden sind.

Die Energieführungskette 1 besteht aus einem Untertrum 6, das über einen Umlenkbereich 7 in ein Obertrum 8 überführt wird. Die Kettenglieder des Obertrums und des Untertrums sind baugleich ausgeführt und mit Führungsanschlägen 9 versehen, die die seitliche Bewegung des Untertrums gegenüber dem Obertrum verhindern.

Es hat sich für viele Abmessungen von Kettengliedern als ausreichend erwiesen, stegartige Führungsanschläge mit einer Höhe von ca. 5 mm und einer Breite von 2-3 mm vorzusehen.

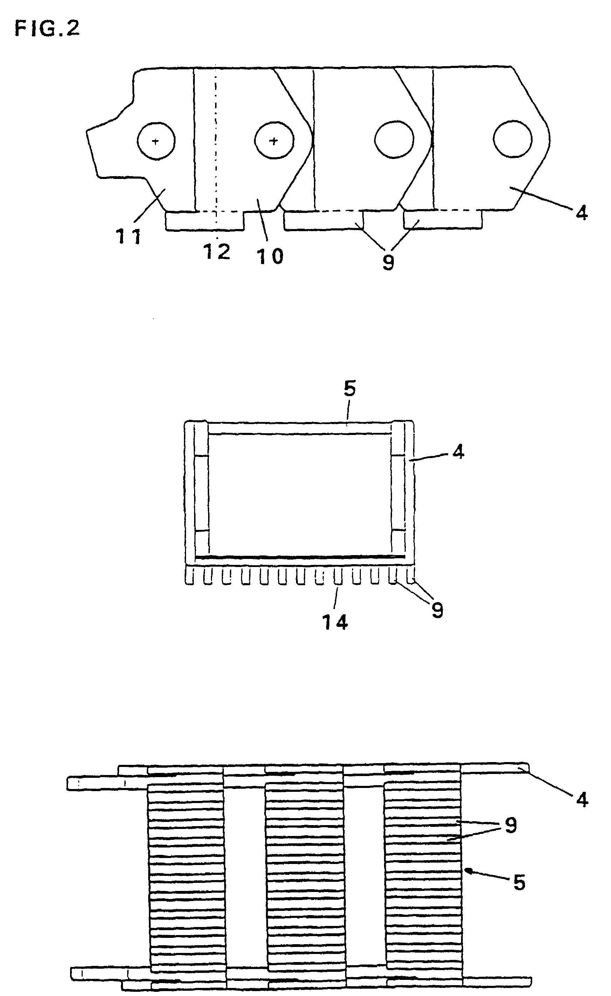

Wie insbesondere aus Fig. 2 hervorgeht, weisen die Seitenwände 4 einen ausgekröpften Bereich 10 sowie einen eingekröpften Bereich 11 auf, wobei sich die Führungsanschläge 9 auf Höhe der Unterkante der Seitenteile 4 (nach der Darstellung in Figur 2 oben) über den eingekröpften Bereich 11 und bis teilweise über den ausgekröpften Bereich 10 erstrecken. Bezüglich der mittig zwischen den Gelenkbereichen eines Kettengliedes angeordneten Mittelebene 12 sind die Führungsanschläge 9 in Richtung auf jeweils einen Gelenkbereich der Kettenglieder hin versetzt angeordnet. Die Länge der Führungsanschläge 9 in Kettenlängsrichtung ist dabei so bemessen, daß unter Berücksichtigung des Biegeradius der Energieführungskette im Umlenkbereich 7 (siehe Fig. 1) die Führungsanschläge 9 die Abwinkelung benachbarter Kettenglieder zueinander nicht behindern und die Verschwenkbarkeit der Kettenglieder allein durch die hierfür vorgesehenen Anschläge begrenzt wird. Zwischen den Führungsanschlägen 9 aufeinanderfolgender Kettenglieder ist im Umlenkbereich 7 an den mit der Bezugsziffer 13 bezeichneten Bereiche somit noch ein geringer Abstand vorgesehen. Die Führungsanschläge können auch eine andere als die gezeigte rechteckige Form aufweisen und beispielsweise im Längsschnitt trapezförmig ausgebildet sein, wobei die Schrägseiten des Trapezes auch als Winkelanlageflächen für benachbarte Führungsanschläge ausgebildet sein können.

Die Führungsanschläge 9 sind als rechteckige Stege mit planparallelen Außenflächen ausgebildet und in gleichen Abständen zueinander auf den einander gegenüberliegenden Querstegen 5 der Kettenglieder 2 angeordnet. Die Führungsanschläge 9 bilden eine Kammstruktur, die als aus einer Vielzahl von U-Profilen bzw. Stegen aufgebaut beschrieben werden kann, wobei die Schenkel der U-Profile durch die Führungsanschläge 9 und die Basis der U-Profile durch den Quersteg 5 gebildet werden. Die Führungsanschläge 9 sind in diesem Ausführungsbeispiel aus dem gleichen Kunststoffmaterial gefertigt wie die Kettenglieder und einteilig an den Querstegen 5 angeformt.

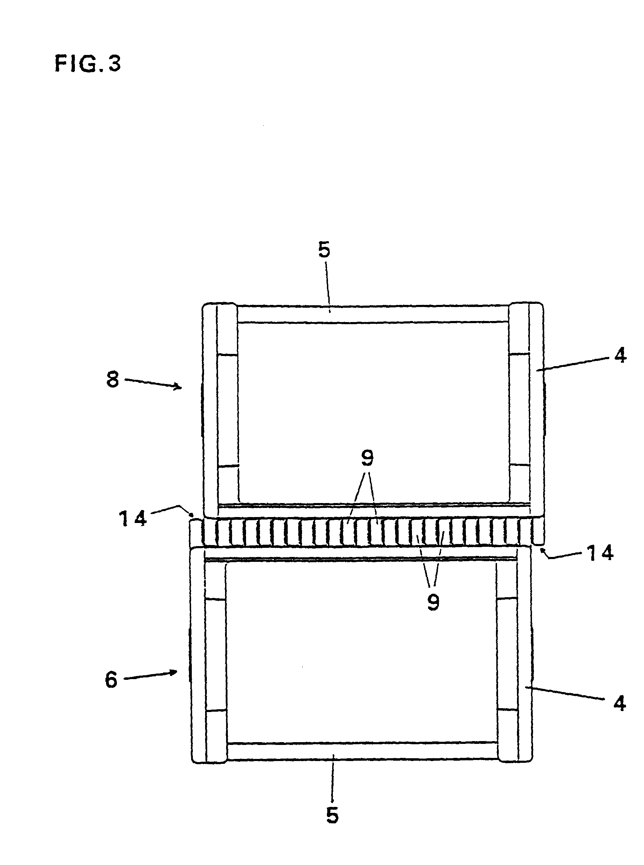

Wie in Fig. 3 gezeigt, greifen die durch die Führungsanschläge 9 gebildeten Kammstrukturen von Kettengliedern des Obertrums 8 in die Zwischenräume der Kammstruktur der Kettenglieder des Untertrums 6 ein, so daß die seitliche Bewegung der Kettenglieder von Untertrum und Obertrum zueinander verhindert ist. Abstand sowie Breite der Führungsanschläge 9 sind dabei so bemessen, daß die Führungsanschläge jeweils mit nur geringem Untermaß zwischen den Führungsanschlägen des gegenüberliegenden Trums geführt werden.

Wird das Obertrum 8 gleitend auf dem Untertrum 6 geführt, so liegen die Stirnflächen 14 der Führungsanschläge auf den Querstegen bzw. Querwänden der gegenüberliegenden Kettenglieder auf. Insgesamt steht so nahezu die gesamte Breite der Kettenglieder als Auflagefläche zur Verfügung, so daß im Gegensatz zu bisher bekannten Energieführungsketten, bei denen lediglich die Schmalseiten der Seitenwände oder an diesen vorgesehene Gleitkufen aufeinander aufliegen, eine besonders große Auflagefläche und damit eine verschleißarme Ausführungsform vorliegt.

Wie in Fig. 1 gezeigt, werden bei der Umlenkung der Energieführungskette die Kettenglieder des in das Obertrum 8 auslaufenden Bereichs des Umlenkbereichs 7 über die Kettenglieder des Untertrums 6 verfahren. Erfolgt dies ohne seitlichen Versatz der Kettenglieder zueinander, so kommen die Stirnseiten 14 der Führungsanschläge 9 des Obertrums 8 mit denen der Führungsanschläge des Untertrums 6 zur Auflage. Aufgrund des stets vorhandenen Gelenkspiels quer zur Achse der Kettenglieder hintereinander erfolgt jedoch nur über eine geringe Verfahrstrecke eine gleitende Bewegung der Führungsanschläge 9 aufeinander. Die Führungsanschläge 9 fädeln dann unter seitlichem Versatz der Kettenglieder in Untertrum und Obertrum zueinander in die Zwischenräume der Kammstruktur des darunterliegenden Kettengliedes ein, so daß auf Höhe des Schnittes A-A die in Fig. 3 gezeigte Anordnung von Obertrum und Untertrum vorliegt. Die Einfädelung wird dabei durch die abgerundeten bzw. abgeschrägten Stirnseiten 14 der Führungsanschläge 9 erleichtert. Liegt in einem Teilbereich der Energieführungskette die in Fig. 3 gezeigte Anordnung von Obertrum und Untertrum zueinander vor, so erfolgt ohne weiteres eine Einfädelung der Kammstrukturen der jeweils nachfolgenden Kettenglieder bei der Verfahrung der Energieführungskette und, da die Länge der Führungsanschläge 9 in Kettenlängsrichtung die Länge der Zwischenräume 15 im gegenüberliegenden Trum überschreitet, bei einmal erfolgter Einfädelung der Kammstrukturen eine einfache Führung der Führungsanschläge in der jeweiligen Spur, ohne daß diese z. B. mittels Auflaufschrägen aufeinander einwirken oder ihre Lage bezüglich der Kettenglieder, an denen sie befestigt sind, ändern müssen. Hierdurch ist insgesamt eine sehr geräuscharme Verfahrung der Energieführungskette auch bei hoher Verfahrgeschwindigkeit gewährleistet. Wenn die Führungsanschläge des weiteren ortsfest an den jeweiligen Kettengliedern befestigt sind, ist die vorliegende Ausführungsform auch besonders wartungsarm.

### Bezugszeichenliste

- 1: Energieführungskette
- 2: Kettenglied
- 3: Gelenkbolzen
- 4: Seitenwand
- 5: Quersteg
- 6: Untertrum
- 7: Umlenkbereich
- 8: Obertrum
- 9: Führungsanschlag
- 10: ausgekröpfter Bereich
- 11: eingekröpfter Bereich
- 12: Mittelebene
- 13: Bereich
- 14: Stirnseite
- 15: Zwischenraum

## Patentansprüche

1. Energieführungskette für Kabel und dergleichen, deren Kettenglieder aus gegenüberliegenden Seitenwänden und diese verbindenden oberen und unteren Querstegen bzw. Wänden bestehen und die gelenkig miteinander verbunden sind, wobei die Energieführungskette einen unteren, etwa geradlinigen Teil (Untertrum) bildet, an den sich mittels eines Umlenkbereichs von mehr als 180° ein oberer, durchhängender Bereich (Obertrum) anschließt, der mit seiner Unterseite zumindest teilweise auf der Oberseite des Untertrums gleitet, und wobei einige Kettenglieder mit Führungsanschlägen versehen sind, die die seitliche Bewegung des gegenüberliegenden Trums verhindern, **dadurch gekennzeichnet,** daß die Führungsanschläge (9) als sich in Kettenlängsrichtung erstreckende Stege ausgebildet sind und an den Kettengliedern (2) des einen Trums (6 bzw. 8) mindestens ein Führungsanschlag (9) zwischen zwei Führungsanschlägen (9) an den Kettengliedern (2) des gegenüberliegenden Trums (8 bzw. 6) greift, so daß die in Eingriff stehenden Kettenglieder (2) gegen Querverschiebung relativ zueinander gesichert sind.

2. Energieführungskette nach Anspruch 1, **dadurch gekennzeichnet,** daß die Führungsanschläge (9) an den äußeren Bereichen der Oberseite der Kettenglieder des Untertrums bzw. Unterseite der Kettenglieder des Obertrums angeordnet sind.

3. Energieführungskette nach Anspruch 2, **dadurch gekennzeichnet,** daß die Führungsanschläge (9) als Doppelstege in Form von U-Profilen ausgebildet sind, deren Zwischenräume komplementär zu den Stegen sind.

4. Energieführungskette nach Anspruch 1, **dadurch gekennzeichnet,** daß eine Vielzahl von Führungsanschlägen (9) vorgesehen ist, die eine sich über die Breite der Kettenglieder (2) erstreckende Kammstruktur bilden, wobei die stegförmigen Führungsanschläge (9) der Kettenglieder (2) des einen Trums in dazu komplementäre U-förmige Zwischenräume zwischen den Führungsanschlägen (9) der Kettenglieder (2) des gegenüberliegenden Trums greifen.

5. Energieführungskette nach einem der Ansprüche 1 bis 4, **dadurch gekennzeichnet,** daß bei gestreckter Anordnung von Obertrum (8) und Untertrum (6) die Länge der Führungsanschläge (9) die Länge der Zwischenräume (15) zwischen Führungsanschlägen aufeinanderfolgender Kettenglieder (2) des gegenüberliegenden Trums überschreitet.

6. Energieführungskette nach einem der Ansprüche 1 bis 5, **dadurch gekennzeichnet,** daß die Führungsanschläge aus der Mittelebene (12) der Seitenwände (4) in Richtung auf einen Gelenkbereich der Kettenglieder (2) hin versetzt angeordnet sind.

7. Energieführungskette nach einem der Ansprüche 1 bis 6, **dadurch gekennzeichnet,** daß die Führungsanschläge (9) an ihren oberen bzw. unteren Außenseiten abgeschrägt sind.

8. Energieführungskette nach einem der Ansprüche 1 bis 7, **dadurch gekennzeichnet,** daß die Führungsanschläge (9) einteilig an den Kettengliedern (2) angeformt sind.

9. Energieführungskette mit lösbar angeordneten Querstegen nach einem der Ansprüche 1 bis 7, **dadurch gekennzeichnet,** daß die Führungsanschläge (9) einstückig an den Querstegen (5) angeformt sind.

10. Energieführungskette nach einem der Ansprüche 1 bis 7, **dadurch gekennzeichnet,** daß die Führungsanschläge (9) lösbar an den Kettengliedern (2) befestigt sind.

## Claims

1. Energy guide chain for cables and the like, the chain links of which comprise opposing side walls and upper and lower transverse webs or walls connecting those side walls, and are articulated to one another, the energy guide chain forming a lower, approximately rectilinear portion (lower half) which is adjoined, via a turn-around region of more than 180°, by an upper, slack region (upper half) of which the lower side slides at least partially on the upper side of the lower half, and some chain links being provided with guide stops which prevent lateral movement of the opposite half of the chain, **characterised in that** the guide stops (9) are in the form of webs extending in the longitudinal direction of the chain and at least one guide stop (9) on the chain links (2) of one half of the chain (6 or 8) engages between two guide stops (9) on the chain links (2) of the opposite half of the chain (8 or 6, respectively) so that the engaged chain links (2) are secured against transverse displacement relative to one another.

2. Energy guide chain according to claim 1, **characterised in that** the guide stops (9) are arranged on the outer regions of the upper side of the chain links of the lower half of the chain or of the lower side of the chain links of the upper half of the chain.

3. Energy guide chain according to claim 2, **characterised in that** the guide stops (9) are constructed as double webs in the form of U-sections, the intermediate spaces of which complement the webs.

4. Energy guide chain according to claim 1, **characterised in that** a large number of guide stops (9) are provided which form a comb structure extending over the width of the chain links (2), the web-form guide stops (9) of the chain links (2) of one half of the chain engaging in complementary U-shaped intermediate spaces between the guide stops (9) of the chain links (2) of the opposite half.

5. Energy guide chain according to any one of claims 1 to 4, **characterised in that,** when the upper half (8) and the lower half (6) of the chain are in an extended arrangement, the length of the guide stops (9) exceeds the length of the intermediate spaces (15) existing between guide stops of consecutive chain links (2) of the opposite half of the chain.

6. Energy guide chain according to any one of claims 1 to 5, **characterised in that** the guide stops are offset from the central plane (12) of the side walls (4) in the direction towards an articulation region of the chain links (2).

7. Energy guide chain according to any one of claims 1 to 6, **characterised in that** the upper or lower outer sides of the guide stops (9) are bevelled.

8. Energy guide chain according to any one of claims 1 to 7, **characterised in that** the guide stops (9) are formed in one piece with the chain links (2).

9. Energy guide chain having releasable transverse webs according to any one of claims 1 to 7, **charac** **terised in that** the guide stops (9) are formed in one piece with the transverse webs (5).

10. Energy guide chain according to any one of claims 1 to 7, **characterised in that** the guide stops (9) are secured releasably to the chain links (2).

## Revendications

1. Chaîne de transmission d'énergie pour câbles et similaires, dont les maillons de chaîne sont constitués par des parois latérales en vis-à-vis et par des traverses ou parois transversales supérieure et inférieure qui relient ces parois, et sont reliés de façon articulée les uns aux autres, ladite chaîne de transmission d'énergie formant une partie inférieure (brin inférieur) approximativement rectiligne, à laquelle se raccorde, au moyen d'une région de renvoi sur plus de 180°, une région supérieure suspendue (brin supérieur), laquelle coulisse par sa face inférieure au moins partiellement sur la face supérieure du brin inférieur, et certains maillons de chaîne étant pourvus de butées de guidage qui empêchent le déplacement latéral du brin opposé, caractérisée en ce que les butées de guidage (9) sont réalisées sous forme de barrettes qui s'étendent dans la direction longitudinale de la chaîne, et sur les maillons (2) de l'un des brins (6 ou 8) au moins une butée de guidage (9) s'engage entre des butées de guidage (9) sur les maillons (2) du brin opposé (8 ou 6), de sorte que les maillons (2) en engagement sont assurés à l'encontre d'un déplacement transversal les uns par rapport aux autres.

2. Chaîne de transmission d'énergie selon la revendication 1, caractérisée en ce que les butées de guidage (9) sont agencées sur les régions extérieures de la face supérieure des maillons du brin inférieur ou respectivement de la face supérieure des maillons du brin supérieur.

3. Chaîne de transmission d'énergie selon la revendication 2, caractérisée en ce que les butées de guidage (9) sont réalisées sous forme de barrettes doubles en forme de profilés en U, dont les intervalles sont complémentaires aux barrettes.

4. Chaîne de transmission d'énergie selon la revendication 1, caractérisée en ce qu'il est prévu une pluralité de butées de guidage (9), qui forment une structure en peigne s'étendant sur la largeur des maillons (2), et en ce que les butées de guidage en forme de barrettes (9) des maillons (2) de l'un des brins s'engagent dans des intervalles en forme de U complémentaires à ceux-ci entre les butées de guidage (9) des maillons (2) du brin opposé.

5. Chaîne de transmission d'énergie selon l'une des revendications 1 à4, caractérisée en ce que lorsque le brin supérieur (8) et le brin inférieur (6) sont étirés, la longueur des butées de guidage (9) dépasse la longueur des intervalles (15) entre les butées de guidage de maillons successifs (2) du brin opposé.

6. Chaîne de transmission d'énergie selon l'une des revendications 1 à 5, caractérisée en ce que les butées de guidage sont agencées de manière déportée depuis le plan médian (12) des parois latérales (4) en direction d'une région d'articulation des maillons (2).

7. Chaîne de transmission d'énergie selon l'une des revendications 1 à 6, caractérisée en ce que les butées de guidage (9) sont biseautées sur leurs faces extérieures supérieure et inférieure.

8. Chaîne de transmission d'énergie selon l'une des revendications 1 à 7, caractérisée en ce que les butées de guidage (9) sont réalisées d'une seule pièce sur les maillons (2).

9. Chaîne de transmission d'énergie comprenant des barrettes transversales agencées de manière détachable, selon l'une des revendications 1 à 7, caractérisée en ce que les butées de guidage (9) sont réalisées d'une seule pièce sur les barrettes transversales (5).

10. Chaîne de transmission d'énergie selon l'une des revendications 1 à 7, caractérisée en ce que des butées de guidage (9) sont fixées de façon détachable sur les maillons (2).
